# EUROPÄISCHE PATENTSCHRIFT

(11) **EP 0 790 886 B1**
(45) Veröffentlichungstag und Bekanntmachung des Hinweises auf die Patenterteilung: **03.03.1999**
(21) Anmeldenummer: 95938432.2
(22) Anmeldetag: 07.11.1995
(51) Int. Cl.: B29B 9/06, B29B 13/02, B29B 13/04

(54) **VORRICHTUNG ZUM GRANULIEREN VON KUNSTSTOFF-STRÄNGEN**
DEVICE FOR GRANULATING PLASTIC STRANDS
DISPOSITIF DE GRANULATION DE JONCS EN PLASTIQUE

(30) Priorität: 07.11.1994 DE 4439774
(43) Veröffentlichungstag der Anmeldung: 27.08.1997
(73) Patentinhaber: C.F. SCHEER & CIE. GMBH & CO., D-70435 Stuttgart (DE)
(72) Erfinder: ZOLLITSCH, Ludwig, D-70825 Korntal (DE); KREUZ, Ulrich, D-71729 Erdmannhausen (DE)
(74) Vertreter: Klunker . Schmitt-Nilson . Hirsch
(86) Internationale Anmeldenummer: EP9504382
(87) Internationale Veröffentlichungsnummer: WO9614195

(56) Entgegenhaltungen:
- DE-C- 4 314 162
- US-A- 2 952 038
- US-A- 3 076 999
- US-A- 5 242 289
- PATENT ABSTRACTS OF JAPAN vol. 6 no. 124 (M-141) [1002] ,9.Juli 1982 & JP,A,57 049515 (MITSUBISHI RAYON ) 23.März 1982,
- PATENT ABSTRACTS OF JAPAN vol. 12 no. 149 (M-694) [2996] ,10.Mai 1988 & JP,A,62 270306 (TOSHIBA MACH. CO. LTD.) 24.November 1987,
- PATENT ABSTRACTS OF JAPAN vol. 10 no. 234 (M-507) [2290] ,14.August 1986 & JP,A,61 068204 (OM SEISAKUSHO K.K.) 8.April 1986,

## Beschreibung

Die Erfindung betrifft eine Vorrichtung zum Granulieren von Kunststoff-Strängen, die schmelzflüssig aus Düsen austreten und einer nachfolgend angeordneten, abwärts geneigten Ablaufrinne zugeführt werden, in der die Kunststof-Stränge mittels eines Flüssigkeitsstromes, insbesondere Wasserstromes transportiert werden, wobei die Vorrichtung weiterhin eine Entwässerungsstrecke für die Kunststoff-Stränge sowie einen hinter dieser Entwässerungsstrecke angeordneten Granulator aufweist, in welchem die erstarrten Kunststoff-Stränge mit Hilfe wenigstens einer Messeranordnung granuliert werden.

Aus der DE 39 00 250 C2 ist eine Vorrichtung zum Abkühlen, Trocknen und Granulieren von schmelzflüssig aus Düsen austretenden Strängen mit einer mit ihrem aufnahmeseitigen Ende unter den Düsen angeordneten Ablaufrinne bekannt, wobei weiterhin eine Einrichtung vorgesehen ist, die auf der Ablaufrinne einen Kühlflüssigkeitsstrom erzeugt, während der Ablaufrinne ein Granulator nachgeordnet ist und außerdem noch eine vor dem abgabeseitigen Ende in der Ablaufrinne angeordnete Entwässerungsstrecke vorgesehen ist, in der die Ablaufrinne mit Durchlässen für den freien Durchtritt der Kühlflüssigkeit versehen ist.

Darüber hinaus ist bei dieser bekannten Vorrichtung die Ablaufrinne im Bereich nach der Entwässerungsstrecke in ihrem Boden über eine solche Länge und so dicht benachbart mit Eintrittsdüsen für einen Gas- oder Luftstrom versehen, daß zur Restwasserentfernung die Stränge gegenüber dem Boden weitgehend reibungsfrei entlang der Ablaufrinne in den an ihrem abgabeseitigen Ende angeordneten Granulator mit einem die sofortige Weiterverarbeitung ermöglichenden Trocknungsgrad geleitet werden. Dieser Granulator weist innerhalb eines entsprechenden Gehäuses im wesentlichen zwei übereinanderliegende Einzugswalzen für die Kunststoff-Stränge auf, ferner eine Messerwalze, die mit einem entsprechenden Gegenmesser zusammenarbeitet. Mit Hilfe dieser Messerwalze und des Gegenmessers werden die von den Einzugswalzen zugeführten Kunststoffstränge granuliert und das infolgedessen durch den Granulator erzeugte Granulat fällt durch einen Ausfallschacht zur weiteren Verarbeitung heraus.

Darüber hinaus ist aus der US-PS 41 80 539 eine Vorrichtung der eingangs definierten Art bekannt, bei welcher auf die Ablaufrinne eine aufwärts geneigte Entwässerungs- und Trocknungsstrecke für die Kunststoff-Stränge folgt, die im wesentlichen aus einem umlaufenden, endlosen und gitterförmig ausgebildeten Förderband besteht, auf welchem die die Ablaufrinne verlassenden und hierbei noch zumindest einen Teil des Flüssigkeitsstromes mitnehmenden Kunststoff-Stränge in Richtung zum Granulator hin weiterbefördert werden. Oberhalb dieses umlaufenden gitterförmigen Förderbandes ist eine Anzahl von Luftdüsen angeordnet, mittels denen verhältnismäßig scharfe Luftstrahlen ("Luftmesser") auf die Oberfläche der Kunststoff-Stränge gerichtet werden. Diese Luftmesser dienen dazu, die Stränge bei deren Weiterbeförderung auf ihren Oberflächen zu trocknen, wobei sie das an diesen noch anhaftende Wasser wegblasen und durch das Gitterband hindurch nach unten abführen. Die gitterförmige Ausbildung des Transportbandes ist bei der bekannten Vorrichtung nach der US-PS 4 180 539 insbesondere deswegen erforderlich, weil relativ scharfe Luftstrahlen von oberhalb auf die Stränge gerichtet werden, so daß die Luft ebenfalls nach unten durch das Gitterband hindurch abgeführt werden muß, weil ansonsten es nicht zu einem richtigen Anpreßdruck der Stränge auf die Oberfläche des Gitterbandes kommen würde vielmehr würde dies dazu führen, daß die mit den Luftmessern beaufschlagten Stränge gleichsam "auffliegen" und "verwirbeln" würden. Hinzu kommt, daß bei der bekannten Entwässerungs- und Trocknungsstrecke lediglich ein Entwässerungs- und Trocknungsvorgang bezüglich der Strangoberflächen gewährleistet ist, während das Stranginnere immer noch eine gegenüber der Oberfläche erhöhte Temperatur aufweist, so daß die nach der Entwässerungs- und Trocknungsstrecke unmittelbar in den Granulator einlaufenden Kunststoff-Strange hinsichtlich ihres Temperaturprofils noch nicht ausgeglichen sind.

Es ist jedoch prinzipiell erforderlich, daß die zu Granulat zu verarbeitenden Kunststoff-Stränge weder zu weich noch zu spröde sind, wenn sie der Messerwalze des Granulators zugeführt werden. Im Hinblick auf diese Forderung und auch wegen der höchst unterschiedlichen Eigenschalten der in Granulatform auf den Markt gebrachten Kunststoffe, wobei diese Eigenschaften von "sehr elastisch" bis zu "außerordentlich spröde" reichen, sind bei bisher bekannt gewordenen Vorrichtungen die zwischen einem Extruder und einem Granulator eingesetzten Kühleinrichtungen bereits vom Hersteller an den später zu verarbeitenden Kunststoff-Typ angepaßt worden, um zu gewährleisten, daß die frisch extrudierten Kunststoff-Stränge mit einer solchen Intensität gekühlt werden, daß sie die gewünschten Festigkeitseigenschaften aufweisen, wenn sie an die Messerwalze des Granulators gelangen. Im Falle der Verarbeitung von bestimmtem Kunststoff, insbesondere von glasfaserverstärken Kunststoffen, wird gefordert, daß die Granuliertemperatur über ca. 100°C liegt, wobei das Temperaturprofil über den Strangquerschnitt gesehen möglichst homogen sein soll. Eine entsprechende Forderung besteht ganz generell z.B. aber auch im Falle der Verarbeitung von Kunststoffen, die von Haus aus relativ schlechte Wärmeleiter sind.

Bei der aus der US-PS 41 80 539 bekannten Vorrichtung ist es durch den dortigen Entwässerungs- und Trocknungsprozeß nicht möglich, den Kunststoff-Strängen vor Eintritt in den Granulator eine homogene Temperaturverteilung über jeweils den gesamten Strangquerschnitt zu verleihen, weil der Entwässerungs- und Trocknungsvorgang sich insbesondere auf die Strangoberflächen konzentriert.

Mit Rücksicht auf die im vorangehenden geschilderten Gegebenheiten und Nachteile bei den bekannten Vorrichtungen zum Abkühlen und Granulieren von Kunststoff-Strängen liegt nunmehr der vorliegenden Erfindung die Aufgabe zugrunde, eine verbesserte Vorrichtung der eingangs definierten Art anzugeben, die in der Weise ausgebildet ist, daß gewährleistet werden kann, daß die in den Granulator eintretenden Stränge eine für ihre Weiterverarbeitung geforderte Temperatur und insbesondere ein über den Strangquerschnitt gesehen möglichst homogenes Temperaturprofil aufweisen.

Diese Aufgabe wird bei einer Vorrichtung der eingangs definierten Art gemäß der Erfindung dadurch gelöst, daß zwischen der Entwässerungsstrecke und dem Granulator wenigstens eine Temperierstrecke angeordnet ist, die aus einer starren, nicht bewegten oder einer starren, vibrierenden Rinne und integrierten Transportwalzen für die Stränge besteht und eine solche Länge aufweist, daß sich die Temperaturunterschiede der Stränge über ihren Querschnitt während der Verweilzeit in der Temperierstrecke weitgehend ausgleichen.

Aufgrund dieser Ausbildung ist es insbesondere möglich, die Verweilzeit der Kunststoffstränge innerhalb der Temperierstrecke in Abhängigkeit von der Transportgeschwindigkeit zu steuern, welche für die Transportwalzen eingestellt wird, welche einen integrierten Bestandteil der Temperierstrecke bzw. der entsprechenden Rinne bilden.

Aufgrund der erfindungsgemäßen Ausbildung der Vorrichtung zum Granulieren von Kunststoff-Strängen ergibt sich der wesentliche Vorteil, daß diese Vorrichtung eine Temperierstrecke mit eigener Transportfunktion besitzt, so daß insbesondere beim Anfahren die Stränge selbsttätig in den Granulator "eingefädelt" werden.

Die erfindungsgemäß vorgesehene Temperierstrecke kann im wesentlichen horizontal ausgerichtet sein, sie kann aber auch in Richtung zum Granulator hin mit einer gegenüber der Horizontalen entweder nach abwärts gerichteten oder nach aufwärts gerichteten Neigung versehen sein.

Die Rinne der Temperierstrecke kann als eine vibrierende Rinne ausgebildet sein, um den angestrebten Effekt des Temperatur-Ausgleichs innerhalb der Kunststoff-Stränge noch zu verstärken und zu unterstützen.

Aufgrund der erfindungsgemäßen Ausbildung ergibt sich eine selbsttransportierende Temperaturausgleichstrecke mit Einfädelfunktion innerhalb der Vorrichtung zum Granulieren dieser Kunststoff-Stränge.

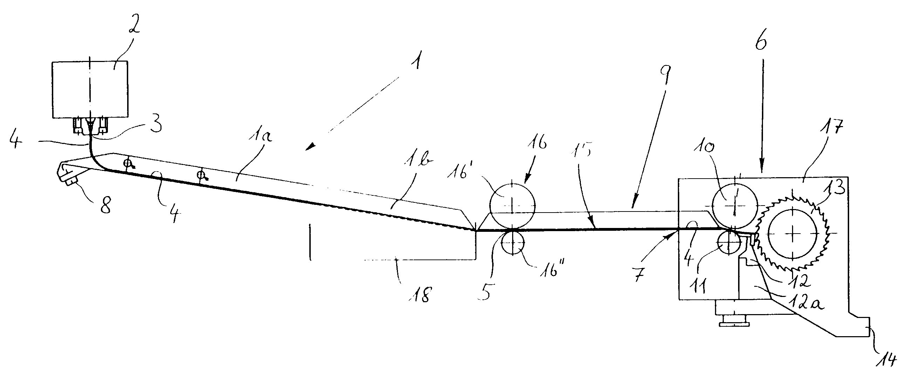

Die Erfindung wird im folgenden anhand eines Ausführungsbeispiels näher erläutert, wobei auf die beigefügte Zeichnung Bezug genommen wird.

Die einzige Figur zeigt eine schematische Seitenansicht einer Vorrichtung zum Abkühlen und Granulieren von Kunststoff-Strängen in ihrer Betriebsposition.

Diese Vorrichtung weist ein schematisch dargestelltes Düsenpaket 2 auf, dem in einer hier nicht näher dargestellten Art und Weise, welche an sich bekannt ist, thermoplastischer Kunststoff schmelzflüssig zugeführt wird, der sodann aus einer unten angeordneten Düse 3 ausgepreßt wird. In der Regel befinden sich mehrere derartiger Düsen 3 in einer Reihe nebeneinander unterhalb des Düsenpakets 2.

Die Figur zeigt die Betriebsposition der Vorrichtung, in welcher die aus den Düsen 3 austretenden Kunststoff-Stränge 4 zunächst auf den Anfangs-Bereich einer schräg geneigt angeordneten Ablaufrinne 1 gelangen, welche an ihrem oberen in der Zeichnungsfigur links dargestellten Ende mit einer Kühl- und Transportwasser-Zuführung 8 versehen ist. Diese in einen ersten Rinnenabschnitt, nämlich eine Kühlstrecke 1a, und in einen zweiten Abschnitt, nämlich eine Entwässerungsstrecke 1b funktionsmäßig aufgeteilte Ablaufrinne 1 leitet die zugeführten Kunststoff-Stränge 4 in paralleler Anordnung mit Hilfe des zugeführten Kühl- und Transportwassers und aufgrund ihrer schräg geneigten Anordnung weiter in Richtung zu einer sich unmittelbar an die Entwässerungsstrecke 1b anschließenden Temperierstrecke 9, die im Bereich zwischen der Ablaufrinne 1 und einem auf der rechten Seite dargestellten Granulator 6 angeordnet ist.

Diese zum Ausgleich von Temperaturunterschieden innerhalb der Kunststoff-Stränge 4 dienende Temperierstrecke 9 besteht im wesentlichen aus einer starren, nicht bewegten Rinne 15 und einem in diese Rinne 15 integrierten, eine untere Vorschubwalze 16'' und eine obere Gegendruckwalze 16' aufweisenden Transportwalzensystem 16 für den Weitertransport der von der Ablaufrinne 1 herkommenden Kunststoff-Stränge 4 in Richtung zu dem Granulator 6 hin, der auf die Temperierstrecke oder Temperaturausgleichstrecke 9 folgt.

Das Transportwalzensystem 16 ist im wesentlichen am Beginn der Rinne 15 angeordnet, wobei ein Spalt 5 zwischen der unteren Vorschubwalze 16'' und der oberen Gegendruckwalze 16' eine solche Weite hat, daß den in den Spalt 5 einlaufenden Strängen 4 mittels Reibschluß, aber ohne wesentliche Verformung eine Vorschubkraft in Richtung zum Granulator 6 hin erteilt wird. Der Spalt 5 des Walzenpaares 16', 16'' befindet sich hierbei in etwa in Höhe des Bodens der Rinne 15.

Im gezeigten Ausführungsbeispiel ist die Länge der Temperierstrecke 9 annähernd gleich der Länge der Ablaufrinne 1, vorzugsweise kann die Temperierstrecke 9 aber auch länger sein als die Ablaufrinne 1.

Der Granulator 6 weist ein Gehäuse 17 auf, das auf seiner der Temperierstrecke 9 zugewendeten Seite mit einer Eintrittsöffnung 7 versehen ist. In diese Eintrittsöffnung 7 führt der zugeordnete Endbereich der Rinne 15 derart hinein, daß die auf ihr weitertransportierten, homogen erstarrten Kunststoffstränge 4 in den Granulator 6 gleichsam mit einem Selbsteinfädelungseffekt eingeleitet werden.

Innerhalb des Gehäuses 17 des Granulators 6 befinden sich zwei Einzugswalzen für die Kunststoff-Stränge 4, nämlich eine obere Einzugswalze 10 und eine untere Einzugswalze 11. Diese beiden Einzugswalzen 10 und 11 ziehen den Strang 4, der jetzt nach und nach die Temperierstrecke 9 verläßt, weiter in den Granulator 6 hinein und führen ihn letztendlich zu einem rotierenden Schermesser 13, das mit einem Amboßmesser 12 zusammenarbeitet, das auf einem Messerhalter 12a angeordnet ist. Mittels dieser Messeranordnung werden die zugeführten Kunststoff-Stränge 4 granuliert, wobei das resultierende Kunststoff-Granulat das Gehäuse 17 bei einem Auslaß 14 verläßt. Im Bereich der Entwässerungsstrecke 1b erfolgt eine gravimetrische Vor-Entwässerung, wobei das Wasser durch einen Auffangkasten 18 unterhalb der Entwässerungsstrecke 1b aufgefangen wird.

Die Temperierstrecke 9 ist bei dem dargestellten Ausführungsbeispiel im wesentlichen horizontal ausgerichtet, es besteht jedoch auch die Möglichkeit, diese Temperierstrecke 9 in Richtung zum Granulator 6 hin mit einer gegenüber der Horizontalen entweder nach abwärts oder nach aufwärts gerichteten Neigung zu versehen, was im einzelnen in der Zeichnung der Einfachheit halber nicht dargestellt ist.

Ferner besteht noch die Möglichkeit, zumindest die Rinne 15 der Temperierstrecke 9 vibrierend auszubilden, derart, daß während des Weitertransportierens der Kunststoff-Stränge 4 durch die Temperierstrecke 9 diese Stränge in entsprechende Vibrationsschwingungen versetzt werden.

Aufgrund der Ausbildung der Vorrichtung zum Granulieren gemäß vorliegender Erfindung erreichen die von der Temperier-Strecke 9 in Richtung zum Granulator 6 hin weiterbeförderten Kunststoff-Stränge 4 die Eintrittsöffnung 7 des Granulator-Gehäuses 17 mit der jeweils erwünschten, über die Strangquerschnitte homogenen Temperatur bzw. dem Erstarrungsgrad, praktisch völlig unabhängig von der Art des primär verwendeten Kunststoffes. Die Kunststoff-Stränge 4 besitzen jetzt eine derartige Steifigkeit, daß sie automatisch in den Granulator 6 eingefädelt und anschließend mit Hilfe der dortigen Messeranordnung problemlos granuliert werden können. Das homogene Temperaturprofil der Stränge ergibt ein qualitativ hochwertiges Granulat mit einwandfreier Schnittfläche und wenig Staubanteil über einen großen Produktionszeitraum.

## Patentansprüche

1. Vorrichtung zum Granulieren von Kunststoff-Strängen (4), die schmelzflüssig aus Düsen (3) austreten und einer nachfolgend angeordneten, nach abwärts geneigten Ablaufrinne (1) zugeführt werden, in welcher die Kunststoff-Stränge mittels eines Flüssigkeitsstromes, insbesondere Wasserstromes transportiert werden, wobei die Vorrichtung weiterhin eine Entwässerungsstrecke (1b) für die Kunststoff-Stränge (4) und einen hinter der Entwässerungsstrecke angeordneten Granulator (6) aufweist, in welchem die erstarrten Kunststoff-Stränge (4) mit Hilfe wenigstens einer Messeranordnung (12, 13) granuliert werden,
**dadurch gekennzeichnet,**
daß zwischen der Entwässerungsstrecke (1b) und dem Granulator (6) wenigstens eine Temperierstrecke (9) angeordnet ist, die aus einer starren, nicht bewegten oder einer starren, vibrierenden Rinne (15) und integrierten Transportwalzen (16) für die Kunststoff-Stränge (4) besteht und eine solche Länge aufweist, daß sich die Temperaturunterschiede der Kunststoff-Stränge (4) über ihren Querschnitt während ihrer Verweilzeit in der Temperierstrecke (9) weitgehend ausgleichen.

2. Vorrichtung nach Anspruch 1,
**dadurch gekennzeichnet,**
daß die Länge der Temperierstrecke (9) mindestens gleich oder größer als die Länge der Ablaufrinne (1) ist.

3. Vorrichtung nach Anspruch 1 oder 2,
**dadurch gekennzeichnet,**
daß die Transportwalzen ein sich gegenüberliegend angeordnetes Walzenpaar (16', 16'') sind, das im wesentlichen am Beginn der Rinne (15) angeordnet ist, wobei ein Spalt (5) des Walzenpaares (16', 16'') eine solche Weite hat, daß den Strängen (4) mittels Reibschluß, aber ohne wesentliche Verformung eine Vorschubkraft in Richtung Granulator (6) erteilt wird, und wobei sich der Walzenspalt (5) in etwa in Höhe des Bodens der Rinne (15) befindet.

4. Vorrichtung nach einem der vorhergehenden Ansprüche,
**dadurch gekennzeichnet,**
daß die Rinne (15) im wesentlichen horizontal ausgerichtet ist.

5. Vorrichtung nach einem der Ansprüche 1 bis 3,
**dadurch gekennzeichnet,**
daß die Rinne (15) in Richtung zum Granulator (6) mit einer gegenüber der Horizontalen nach abwärts gerichteten Neigung angeordnet ist.

6. Vorrichtung nach einem der Ansprüche 1 bis 3,
**dadurch gekennzeichnet,**
daß die Rinne (15) in Richtung zum Granulator (6) mit einer gegenüber der Horizontalen nach aufwärts gerichteten Neigung angeordnet ist.

## Claims

1. An apparatus for granulating plastic strands (4) which emerge from nozzles (3) in molten form and are supplied to a following, downward inclined runoff channel (1) in which the plastic strands are transported by means of a liquid stream, in particular water stream, the apparatus further having a dewatering zone (1b) for the plastic strands (4) and a granulator disposed after the dewatering zone (6) for granulating the solidified plastic strands (4) with the aid of at least one knife assembly (12, 13),
characterized in that between the dewatering zone (1b) and the granulator (6) there is at least one tempering zone (9) comprising a rigid, unmoving or a rigid, vibrating channel (15) and integrated transport rolls (16) for the plastic strands (4) and having a length such that the temperature differences of the plastic strands (4) across their cross section are largely equalized during their holding time in the tempering zone (9).

2. The apparatus of claim 1, characterized in that the length of the tempering zone (9) is at least equal to or greater than the length of the runoff channel (1).

3. The apparatus of claim 1 or 2, characterized in that the transport rolls are an opposing pair of rolls (16', 16'') disposed essentially at the beginning of the channel (15), a gap (5) of the pair of rolls (16', 16'') having a width such that the strands (4) are given a feeding force toward the granulator (6) by means of frictional engagement but without essential deformation, and the roll gap (5) being located approximately at the height of the bottom of the channel (15).

4. The apparatus of any of the above claims, characterized in that the channel (15) is aligned essentially horizontally.

5. The apparatus of any of claims 1 to 3, characterized in that the channel (15) is disposed with a downward inclination to the horizontal toward the granulator (6).

6. The apparatus of any of claims 1 to 3, characterized in that the channel (15) is disposed with an upward inclination to the horizontal toward the granulator (6).

## Revendications

1. Dispositif pour granuler des cordons ou joncs (4) en matière plastique, qui sortent en fusion des tuyères (3) et sont conduits à une goulotte ou rigole (1) d'écoulement disposée à la suite et inclinée vers le bas ou l'aval, et dans lequel les cordons en matière plastique sont transportés par un courant de liquide, en particulier un courant d'eau, le dispositif comprenant en outre un tronçon (1b) de déshydratation pour les cordons en matière plastique (4), et un granulateur (6) situé derrière le tronçon de déshydratation, et dans lequel les cordons solidifiés en matière plastique (4) sont granulés à l'aide d'au moins un système de coupe (12, 13), caractérisé en ce qu'entre le tronçon de déshydratation (1b) et le granulateur (6), est disposé au moins un tronçon d'égalisation de température (9) qui se compose d'une goulotte (15) rigide et non mobile ou d'une goulotte (15) rigide et vibrante et de cylindres ou rouleaux de transport intégrés (16) pour les cordons de matière plastique (4), et qui présente une longueur telle que les différences de température des cordons (4) en matière plastique s'équilibrent largement, dans le sens de leur section transversale, pendant leur séjour dans le tronçon d'égalisation de température (9).

2. Dispositif selon la revendication 1, caractérisé en ce que la longueur du tronçon d'égalisation de température (9) est au moins égale ou supérieure à la longueur de la goulotte d'écoulement ou d'évacuation (1).

3. Dispositif selon la revendication 1 ou 2, caractérisé en ce que les cylindres de transport sont constitués par une paire (deux) de cylindres (16', 16'') disposés opposés l'un à l'autre et qui sont disposés sensiblement au début de la goulotte (15), l'intervalle (5) entre les deux cylindres (16', 16'') présentant une largeur telle que les cordons ou joncs (4) soient soumis, par le fait de la friction mais sans déformation sensible, à une force d'avance dans la direction du granulateur (6), et dans lequel l'intervalle (5) entre les cylindres se trouve sensiblement à la hauteur du corps de la goulotte (15).

4. Dispositif selon l'une des revendications précédentes, caractérisé en ce que la goulotte (15) est orientée de façon sensiblement horizontale.

5. Dispositif selon l'une des revendications 1 à 3, caractérisé en ce que la goulotte (15) est disposé dans la direction du granulateur (6) avec une inclinaison par rapport à l'horizontale, dirigée vers l'aval ou le bas.

6. Dispositif selon l'une des revendications 1 à 3, caractérisé en ce que la goulotte (15) est disposée dans la direction du granulateur (6) avec une inclinaison par rapport à l'horizontale dirigée vers le haut ou l'amont.
